# EUROPEAN PATENT APPLICATION

(11) **EP 4 395 052 A1**
(43) Date of publication of application: **03.07.2024**
(21) Application number: 22897096.8
(22) Date of filing: 13.06.2022
(51) Int. Cl.: H01M 50/536, H01M 50/533, H01M 10/02, H01M 50/583

(54) **CELL CONNECTING SHEET AND CELL BATTERY**

(30) Priority: 29.11.2021 CN 202122955627 U
(71) Applicant: Eve Power Co., Ltd., Jingmen Hubei 448000 (CN)
(72) Inventor: LI, Xing, Jingmen, Hubei 448000 (CN)
(74) Representative: Murgitroyd & Company
(86) International application number: PCT/CN2022/098301
(87) International publication number: WO 2023/092998

(57) **Abstract**

Provided are a cell connecting sheet and a cell battery. The cell connecting sheet comprises a tab connecting portion and a terminal connecting portion (3); the tab connecting portion comprises a tab connecting sheet (11) and a protection sheet (12); a first side of the protection sheet (12) is connected to the tab connecting sheet (11); a second side of the protection sheet (12) and the tab connecting sheet (11) form an open/closed port; the open/closed port is configured to place a tab between the tab connecting sheet (11) and the protection sheet (12); and the protection sheet (12) and the tab connecting sheet (11) are configured to be soldered with the tab. The terminal connecting port (3) is located on the same plane with the tab connecting sheet (11), and is connected to the tab connecting sheet (11), and the terminal connecting portion (3) is configured to be soldered with a terminal.

## Description

The present disclosure claims priority to Chinese Patent Application No. 202122955627.0, filed with the China National Intellectual Property Administration on November 29, 2021, which is incorporated herein by reference in its entirety.

### TECHNICAL FIELD

The present disclosure relates to the technical field of battery technologies, and in particular to a cell connecting sheet and a cell battery.

### BACKGROUND

A cell connecting sheet of a square aluminum shell lithium battery plays a role in connecting a tab of a core pack to a terminal of a top cover assembly. The cell connecting sheet is ultrasonically soldered to the tab, and is laser-soldered to the terminal, to ensure connection strength and over-current strength.

The tab includes a plurality of foil layers ranging from 4 µm to 16 µm. The tab is easily fragmented and broken, and stuck to a soldering head, when the cell connecting sheet in related technologies is directly ultrasonically soldered to the tab. In addition, a tab connecting sheet of the cell connecting sheet in the related technologies is connected to the tab, and then, a terminal connecting sheet of the cell connecting sheet penetrates through a terminal hole to connect the terminal by soldering. As a result, it is easy to damage stability of the connection between the tab connecting sheet and the terminal connecting sheet, thereby affecting a cell battery.

### SUMMARY

The present disclosure provides a cell connecting sheet and a cell battery, to ensure stability of a connection between a tab and a terminal, and to ensure performance of the cell battery.

The present disclosure includes the following technical solutions.

A cell connecting sheet is provided, including:
a tab connecting portion provided with a tab connecting sheet and a protection sheet, wherein a first side of the protection sheet is connected to the tab connecting sheet, a second side of the protection sheet defines an opening with the tab connecting sheet, the opening is configured for a tab to place between the tab connecting sheet and the protection sheet, and the protection sheet and the tab connecting sheet are configured to be soldered with the tab; and
a terminal connecting portion, located in a same plane as the tab connecting sheet and connected to the tab connecting sheet, wherein the terminal connecting portion is configured to be soldered to a terminal.

In an embodiment, the cell connecting sheet further includes a fusing portion, wherein the fusing portion is arranged between the tab connecting portion and the terminal connecting portion.

In an embodiment, the tab connecting portion includes a first tab connecting portion and a second tab connecting portion, and the first tab connecting portion is connected to the second tab connecting portion through a communication portion; and
the fusing portion includes a first fusing portion and a second fusing portion, a first end of the first fusing portion is connected to the first tab connecting portion, and a second end of the first fusing portion is connected to the terminal connecting portion; and a first end of the second fusing portion is connected to the second tab connecting portion, and a second end of the second fusing portion is connected to the terminal connecting portion.

In an embodiment, a separation portion is further arranged on the cell connecting sheet, and the separation portion is configured to separate the first fusing portion and the second fusing portion.

In an embodiment, a length of the first tab connecting portion and a length of the second tab connecting portion are equal, and are each greater than a length of the communication portion.

In an embodiment, the length of the communication portion is equal to half the length of the first tab connecting portion/half the length of the second tab connecting portion.

In an embodiment, the terminal connecting portion is provided with a plurality of soldering grooves, an inner side wall of each of the soldering grooves has an inclined inner wall, and an area of a cross-section of the soldering groove decreases gradually from a top to a bottom.

In an embodiment, the inclined inner wall defines an inclination angle ranging from 30° to 60°.

In an embodiment, a depth of each soldering groove is greater than 0.2 mm.

In an embodiment, an area of a maximum cross-section of the soldering groove ranges from 0.09 mm² to 0.49 mm².

A cell battery is provided, including a cell and a cover plate, wherein the cell includes a tab, the cover plate is provided with a terminal, and the tab is connected to the terminal through the cell connecting sheet of any one of the above.

In an embodiment, the cell includes a core pack, the core pack includes a first core pack and a second core pack, and a tab of the first core pack and a tab of the second core pack are connected to the tab connecting portion, respectively.

### BRIEF DESCRIPTION OF THE DRAWINGS

FIG. 1 is a top view of a cover plate according to some embodiments of the present disclosure.
FIG. 2 is a front view of a cover plate according to some embodiments of the present disclosure.
FIG. 3 is a bottom view of a cover plate according to some embodiments of the present disclosure.
FIG. 4 is a schematic diagram of a connection between a terminal and a tab by a cell connecting sheet according to some embodiments of the present disclosure.
FIG. 5 is a schematic structure diagram of a cell connecting sheet according to some embodiments of the present disclosure.
FIG. 6 is a side view of a cell connecting sheet according to some embodiments of the present disclosure.
FIG. 7 is a schematic structure diagram of a first core pack according to some embodiments of the present disclosure.
FIG. 8 is a top view of a cell connecting sheet according to some embodiments of the present disclosure.

List of reference numerals:
100. first core pack; 200. second core pack; 300. cover plate;
101. first positive tab; 102. first negative tab; 201. second positive tab; 202. second negative tab; 301. positive terminal; 302. negative terminal;
1. first tab connecting portion; 2. second tab connecting portion; 3. terminal connecting portion; 4. first fusing portion; 5. second fusing portion; 6. communication portion; 7. separation portion; 8. ultrasonic soldering mark;
11. tab connecting sheet; 12. protection sheet; 31. soldering groove.

### DETAILED DESCRIPTION OF THE EMBODIMENTS

The technical solutions of the present disclosure are described below in conjunction with the accompanying drawings and the embodiments.

In the description of the present disclosure, terms "linked", "connected", and "fixed" should be understood in a broad sense. For example, the connection may be a fixed connection, a detachable connection, or an integral connection; or the connection may be a mechanical connection or an electrical connection; or the connection may be a direct connection, an indirect connection through an intermediate, or internal communication between two elements or an interaction relationship between two elements. A person of ordinary skill in the art may understand the meanings of the foregoing terms in the present disclosure according to an actual situation.

In the present disclosure, a first feature is "on" or "below" a second feature may indicate that the first feature and the second feature are in direct contact, or the first feature and the second feature are in contact through additional features between them rather than in direct contact. In addition, that the first feature is "above", "over", or "on" the second feature may indicate that the first feature is directly above and obliquely above the second feature, or may merely indicate that the horizontal position of the first feature is higher than that of the second feature. That the first feature is "below", "under", or "beneath" the second may indicate that the first feature is directly below and obliquely below the second feature, or may merely indicate that the horizontal height of the first feature is lower than that of the second feature.

In the description of the present embodiment, orientation or position relationships indicated by terms such as "upper", "lower", and "right" are based on orientation or position relationships shown in the accompanying drawings, and are used only for ease of description and simplifying operations, rather than indicating or implying that the mentioned apparatus or element has a particular orientation or is constructed and operated in a particular orientation. In addition, the terms "first" and "second" are only used to distinguish from descriptions and have no specific meaning.

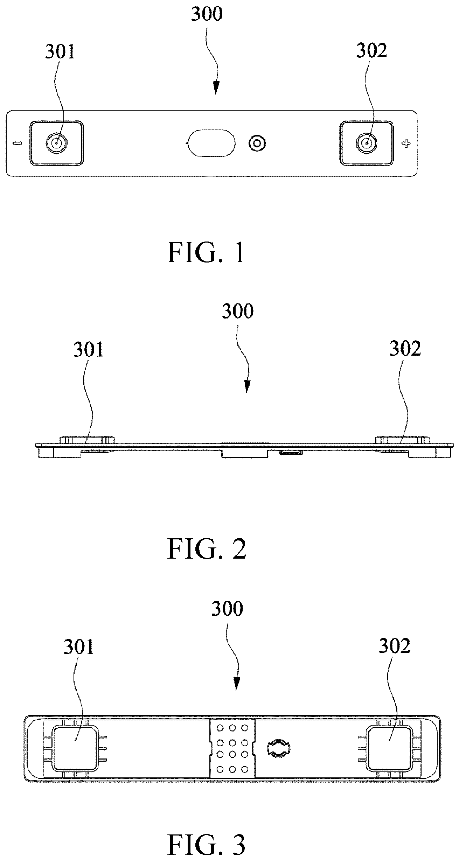

As shown in FIG. 1 to FIG. 4, the present embodiment provides a cell battery. The cell battery includes a cell and a cover plate 300. The cell includes a tab, and a terminal is arranged on the cover plate 300. The tab is connected to the terminal through a cell connecting sheet.

The cell battery provided in the present embodiment is a square aluminum shell lithium battery, and further includes a housing, a positive tab, and a negative tab, wherein the positive tab and the negative tab are extended out from an end of the cell. A positive terminal 301 and a negative terminal 302 are provided on the cover plate 300. As the cell is placed in the housing, the positive tab is connected to the positive terminal 301 through a cell connecting sheet, and the negative tab is connected to the negative terminal 302 through another cell connecting sheet. The tab is connected to the cell connecting sheet through ultrasonic soldering, and the terminal is connected to the cell connecting sheet through laser soldering.

It should be noted that, the cell connecting sheet configured to connect the positive tab to the positive terminal 301 has a same material as the cell connecting sheet configured to connect the positive tab to the positive terminal 301, and the material made the cell connecting sheet is aluminum. The cell connecting sheet configured to connect the positive tab to the positive terminal 301 has a same material as the cell connecting sheet configured to connect the positive tab to the positive terminal 301, and the material made the cell connecting sheet is copper.

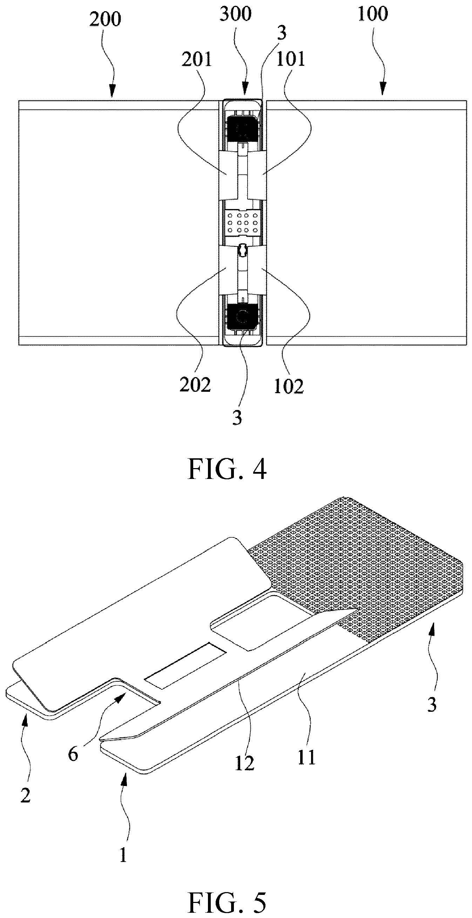

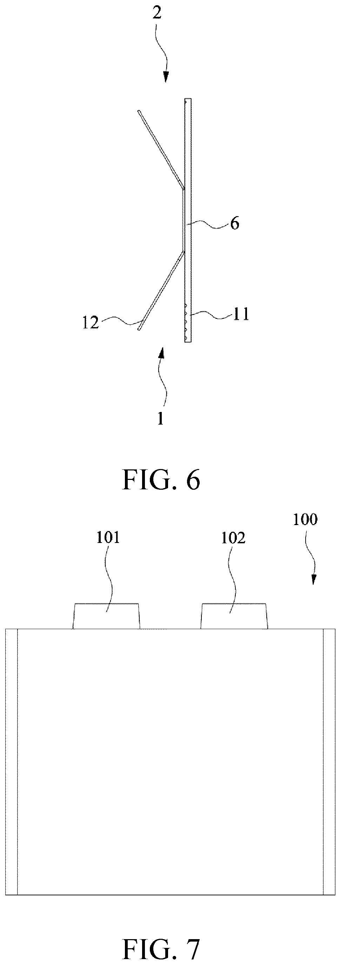

As shown in FIG. 5 and FIG. 6, the present embodiment further provides a cell connecting sheet. The cell connecting sheeting includes a tab connecting portion and a terminal connecting portion 3. The tab connecting portion includes a tab connecting sheet 11 and a protection sheet 12. A first side of the protection sheet 12 is connected to the tab connecting sheet 11, and a second side of the protection sheet 12 and the tab connecting sheet 11 define an opening, the opening is configured for the tab to place between the tab connecting sheet 11 and the protection sheet 12. The protection sheet 12 and the tab connecting sheet 11 are configured to be soldered with the tab. The terminal connecting portion 3 is in a same plane as the tab connecting sheet 11 and connected to the tab connecting sheet 11, wherein the terminal connecting portion 3 is configured to be soldered with a terminal.

By arranging the protection sheet 12 in the tab connecting portion, as the tab is ultrasonically soldered to the tab connecting sheet 11, the opening defined by the protection sheet 12 and the tab connecting sheet 11 is configured for the tab to place between the protection sheet 12 and the tab connecting sheet 11. An ultrasonic soldering head is arranged above the protection sheet 12, to solder the protection sheet 12, the tab, and the tab connecting sheet 11 together. The ultrasonic soldering head is not in direct contact with the tab, to avoid a risk of fragmenting and breaking the tab and a risk of sticking the ultrasonic soldering head to the tab. In addition, the terminal connecting portion 3 and the tab connecting sheet 11 soldered to the terminal are disposed in a same plane, to avoid damaging stability of the connection between the tab connecting portion and the terminal connecting portion upon the terminal connecting portion extending through the terminal hole to be soldered to the terminal after the tab is soldered to the tab connecting portion, and to ensure stability of the connection between the tab and the terminal.

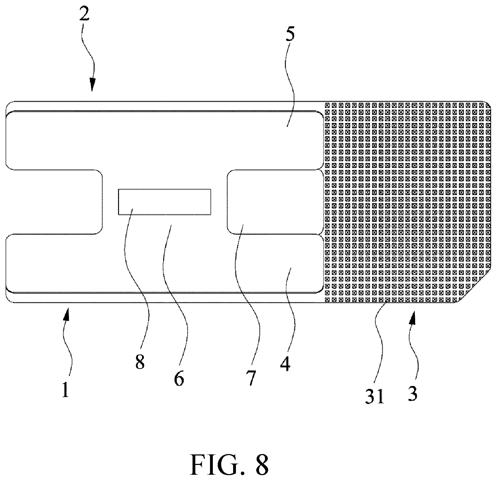

As shown in FIG. 8, in an embodiment, the cell connecting sheet further includes a fusing portion, wherein the fusing portion is arranged between the tab connecting portion and the terminal connecting portion 3. In a case that the temperature of the cell battery rises because of being abused, it is easy for a fire to cause a safety accident. By arranging the fusing portion, in a case that the cell battery has an excessively high current, the fusing portion between the tab connecting portion and the terminal connecting portion 3 is blown, to disconnect the tab with the terminal. As such, the cell battery is short-circuited, to improve safety performance of the cell battery.

As shown in FIG. 4 and FIG. 7, the cell of the cell battery provided in the present embodiment includes a core pack and a tab, and the tab is connected to an end of the core pack. The core pack includes a first core pack 100 and a second core pack 200, and a tab of the first core pack 100 and a tab of the second core pack 200 are connected to the tab connecting portion, respectively. The first core pack 100 includes a first positive tab 101 and a first negative tab 102. The second core pack 200 includes a second positive tab 201 and a second negative tab 202. The first positive tab 101 and the second positive tab 201 are connected to the positive terminal 301 shown in FIG. 1 through a cell connecting sheet made of aluminum. The first negative tab 102 and the second negative tab 202 are connected to the negative terminal 302 shown in FIG. 1 through a cell connecting sheet made of copper.

As shown in FIG. 8, in an embodiment, the tab connecting portion includes a first tab connecting portion 1 and a second tab connecting portion 2, and the first tab connecting portion 1 is connected to the second tab connecting portion 2 through a communication portion 6. The fusing portion includes a first fusing portion 4 and a second fusing portion 5, a first end of the first fusing portion 4 is connected to the first tab connecting portion 1, and a second end of the first fusing portion 4 is connected to the terminal connecting portion 3. A first end of the second fusing portion 5 is connected to the second tab connecting portion 2, and a second end of the second fusing portion 5 is connected to the terminal connecting portion 3.

As shown in FIG. 5 and FIG. 6, in the present embodiment, a tab connecting sheet 11 of the first tab connecting portion 1 and a tab connecting sheet 11 of the second tab connecting portion 2 are connected through a communication portion 6 to form an integrated structure. A protection sheet 12 of the first tab connecting portion 1 and a protection sheet 12 of the second tab connecting portion 2 are connected through another communication portion 6 to form an integrated structure. In addition, the two protection sheets 12 are both bent upward from sides close to each other, and the two communication portions 6 are ultrasonic soldered to connect the tab connecting sheet 11 with the protection sheet 12, so that a side of the tab connecting sheet 11 away from the communication portion 6 and a side of the protection sheet 12 away from the communication portion 6 define an opening. After the ultrasonic soldering, an ultrasonic soldering mark 8 remains on the communication portion 6, as shown in FIG. 8.

In a case that the first positive tab 101 and the second positive tab 201 are connected to the cell connecting sheet made of aluminum, the first positive tab 101 is arranged between the tab connecting sheet 11 and the protection sheet 12 of the first tab connecting portion 1, and the first positive tab 101 is ultrasonically soldered to the first tab connecting portion 1. The second positive tab 201 is arranged between the tab connecting sheet 11 and the protection sheet 12 of the second tab connecting portion 2, and the second positive tab 201 is ultrasonically soldered to the second tab connecting portion 2. The terminal connecting portion 3 is connected to the positive terminal 301 through laser soldering, thereby accumulating positive energy of both the first core pack 100 and the second core pack 200 to the positive terminal 301.

In a case that the first negative tab 102 and the second negative tab 202 are connected to the cell connecting sheet made of copper, the first negative tab 102 is arranged between the tab connecting sheet 11 and the protection sheet 12 of the first tab connecting portion 1, and the first negative tab 102 is ultrasonically soldered to the first tab connecting portion 1. The second negative tab 202 is arranged between the tab connecting sheet 11 and the protection sheet 12 of the second tab connecting portion 2, and the second negative tab 202 is ultrasonically soldered to the second tab connecting portion 2. The terminal connecting portion 3 is connected to the negative terminal 302 through laser soldering, thereby accumulating negative energy of both the first core pack 100 and the second core pack 200 to the negative terminal 302.

The fusing portion reduces the area to form the first fusing portion 4 and the second fusing portion 5, thereby promoting a blowing, and eliminating a fire outbreak risk in time.

In the present embodiment, the first fusing portion 4 and the first tab connecting portion 1 are an integrated structure, and the second fusing portion 5 and the second tab connecting portion 2 are an integrated structure.

In an embodiment, a length of the first tab connecting portion 1 and a length of the second tab connecting portion 2 are equal, and are each greater than a length of the communication portion 6.

The length of the first tab connecting portion 1 and the length of the second tab connecting portion 2 are set to be equal, to ensure symmetry between the first tab connecting portion 1 and the second tab connecting portion 2. To reduce the weight of the cell connecting sheet, the length of the communication portion 6 arranged between the first tab connecting portion 1 and the second tab connecting portion 2 is set to be less than the length of the first tab connecting portion 1 and the length of the second tab connecting portion 2.

In an embodiment, the length of the communication portion 6 is equal to half the length of the first tab connecting portion 1 or half the length of the second tab connecting portion 2. In another embodiment, the length of the communication portion 6 is not specifically limited, and may alternatively be equal to a third or a quarter of the length of the first tab connecting portion 1 (or the second tab connecting portion 2), as long as the length can connect the first tab connecting portion 1 to the second tab connecting portion 2, and can connect the protection sheet 12 to the tab connecting sheet 11 through ultrasonic soldering.

In an embodiment, a separation portion 7 is further arranged on the cell connecting sheet, and the separation portion 7 is configured to separate the first fusing portion 4 and the second fusing portion 5. In the present embodiment, the separation portion 7 is arranged between the first fusing portion 4 and the second fusing portion 5, and is arranged corresponding to the communication portion 6. For example, in a case that the first fusing portion 4 is first blown, but the second fusing portion 5 is not blown, the current of the first tab connecting portion 1 passes through the communication portion 6 and is accumulated to the second fusing portion 5 to promote the second fusing portion 5 to blow. As such, the current is interrupted fast, and the safety performance of the cell battery is improved.

In an embodiment, the terminal connecting portion 3 is provided with a plurality of soldering grooves 31, each of the soldering grooves 31 has an inclined inner wall, and an area of the cross-section of the soldering groove 31 decreases gradually from a top to a bottom. As the terminal is laser-soldered to the terminal connecting portion 3, the laser reaches the bottom of the soldering groove 31 from the opening of the soldering groove 31, to solder the terminal connecting portion 3 to the terminal of the cover plate 300 at the bottom of the soldering groove 31. The arrangement of the soldering groove 31 effectively prevents optical reflection of laser soldering from burning a laser lens out, and avoids poor soldering for the cell connecting sheet.

In an embodiment, the inclined inner wall has an inclination angle ranging from 30° to 60°. The soldering groove 31 is molded through draft and taper, and the angle for draft and taper is set to 30° to 60° to obtain the inclination angle, to prevent a die from being stuck to a material upon drafting and tapering. In addition, diffuse reflection generated by laser-soldering the terminal to the terminal connecting sheet does not damage the laser lens.

In the present embodiment, the angle for draft and taper is 45°.

In an embodiment, a depth of the soldering groove 31 is greater than 0.2 mm, for example, 0.25 mm, 0.27 mm, or 0.3 mm. With the depth of the soldering groove 31 greater than 0.2 mm, a laser soldering effect is better. However, the depth of the soldering groove 31 is not set to be excessively deep, to avoid over-current effect of the cell connecting sheet from being affected.

In an embodiment, an area of a maximum cross section of the soldering groove 31 ranges from 0.09 mm² to 0.49 mm².

In a case that the terminal is laser-soldered to the terminal connecting portion 3, laser power is set to 2800 KW to 3200 KW, and the soldering groove 31 is designed to have a surface size of 0.3 mm to 0.7 mm * 0.3 mm to 0.7 mm, to achieve a better soldering effect. As such, it can effectively prevent optical reflection of the laser soldering from burning the laser lens out and avoid poor soldering for the cell connecting sheet.

Based on the cell connecting sheet provided in the present disclosure, by arranging the protection sheet in the tab connecting portion, the opening of the protection sheet and the tab connecting sheet is configured for the tab to place between the protection sheet and the tab connecting sheet, as the tab is soldered to the tab connecting sheet. An ultrasonic soldering head is arranged above the protection sheet during ultrasonic soldering, to solder the protection sheet, the tab, and the tab connecting sheet together. The ultrasonic soldering head is not in direct contact with the tab, to avoid a risk of fragmenting and breaking the tab and a risk of sticking the soldering head to the tab. In addition, the terminal connecting portion and the tab connecting sheet are disposed in a same plane and are connected to the terminal through soldering, compared with the related technologies, to ensure stability of the connection between the tab connecting portion and the terminal connecting portion upon the terminal connecting portion extending through the terminal hole and being soldered to the terminal after the tab is soldered to the tab connecting portion, and to ensure stability of the connection between the tab and the terminal.

The foregoing cell connecting sheet is applied to the cell battery provided in the present disclosure, to ensure reliability of the connection between the tab and the terminal, thereby ensuring performance of the cell battery.

## Claims

1. A cell connecting sheet, comprising:
a tab connecting portion provided with a tab connecting sheet (11) and a protection sheet (12), wherein a first side of the protection sheet (12) is connected to the tab connecting sheet (11), a second side of the protection sheet (12) defines an opening with the tab connecting sheet (11), the opening is configured for a tab to place between the tab connecting sheet (11) and the protection sheet (12), and the protection sheet (12) and the tab connecting sheet (11) are configured to be soldered with the tab; and
a terminal connecting portion (3) disposed in a same plane as the tab connecting sheet (11) and connected to the tab connecting sheet (11), wherein the terminal connecting portion (3) is configured to be soldered to a terminal.

2. The cell connecting sheet of claim 1, further comprising a fusing portion, wherein the fusing portion is arranged between the tab connecting portion and the terminal connecting portion (3).

3. The cell connecting sheet of claim 2, wherein the tab connecting portion comprises a first tab connecting portion (1) and a second tab connecting portion (2), and the first tab connecting portion (1) is connected to the second tab connecting portion (2) through a communication portion (6); and
the fusing portion comprises a first fusing portion (4) and a second fusing portion (5), wherein a first end of the first fusing portion (4) is connected to the first tab connecting portion (1), and a second end of the first fusing portion (4) is connected to the terminal connecting portion (3); and wherein a first end of the second fusing portion (5) is connected to the second tab connecting portion (2), and a second end of the second fusing portion (5) is connected to the terminal connecting portion (3).

4. The cell connecting sheet of claim 3, wherein a separation portion (7) is further arranged on the cell connecting sheet, and the separation portion (7) is configured to separate the first fusing portion (4) and the second fusing portion (5).

5. The cell connecting sheet of claim 3, wherein a length of the first tab connecting portion (1) and a length of the second tab connecting portion (2) are equal, and are each greater than a length of the communication portion (6).

6. The cell connecting sheet of claim 5, wherein the length of the communication portion (6) is equal to half the length of the first tab connecting portion (1).

7. The cell connecting sheet of claim 1, wherein the terminal connecting portion (3) is provided with a plurality of soldering grooves (31), an inner side wall of each of the soldering grooves (31) has an inclined inner wall, and an area of a cross-section of the soldering groove (31) decreases gradually from a top to a bottom.

8. The cell connecting sheet of claim 7, wherein the inclined inner wall defines an inclination angle ranging from 30° to 60°.

9. The cell connecting sheet of claim 7, wherein a depth of the soldering groove (31) is greater than 0.2 mm.

10. The cell connecting sheet of claim 7, wherein an area of a maximum cross-section of the soldering groove (31) ranges from 0.09 mm² to 0.49 mm².

11. A cell battery, comprising a cell, a cover plate (300), and a cell connecting sheet, wherein the cell comprises a tab, the cover plate (300) is provided with a terminal, and the tab is connected to the terminal through the cell connecting sheet, and wherein the cell connecting sheet comprises:
a tab connecting portion provided with a tab connecting sheet (11) and a protection sheet (12), wherein a first side of the protection sheet (12) is connected to the tab connecting sheet (11), a second side of the protection sheet (12) defines an opening with the tab connecting sheet (11), the opening is configured for a tab to place between the tab connecting sheet (11) and the protection sheet (12), and the protection sheet (12) and the tab connecting sheet (11) are configured to be soldered with the tab; and
a terminal connecting portion (3) disposed in a same plane as the tab connecting sheet (11) and connected to the tab connecting sheet (11), wherein the terminal connecting portion (3) is configured to be soldered to the terminal.

12. The cell battery of claim 11, wherein the cell comprises a core pack, and the core pack comprises a first core pack (100) and a second core pack (200), wherein a tab of the first core pack (100) and a tab of the second core pack (200) are connected to the tab connecting portion, respectively.

13. The cell battery of claim 11, wherein the cell connecting sheet further comprises a fusing portion, wherein the fusing portion is arranged between the tab connecting portion and the terminal connecting portion (3).

14. The cell battery of claim 13, wherein the tab connecting portion comprises a first tab connecting portion (1) and a second tab connecting portion (2), and the first tab connecting portion (1) is connected to the second tab connecting portion (2) through a communication portion (6); and
the fusing portion comprises a first fusing portion (4) and a second fusing portion (5), wherein a first end of the first fusing portion (4) is connected to the first tab connecting portion (1), and a second end of the first fusing portion (4) is connected to the terminal connecting portion (3); and wherein a first end of the second fusing portion (5) is connected to the second tab connecting portion (2), and a second end of the second fusing portion (5) is connected to the terminal connecting portion (3).

15. The cell battery of claim 14, wherein a separation portion (7) is further arranged on the cell connecting sheet, and the separation portion (7) is configured to separate the first fusing portion (4) and the second fusing portion (5).

16. The cell battery of claim 14, wherein a length of the first tab connecting portion (1) and a length of the second tab connecting portion (2) are equal, and are each greater than a length of the communication portion (6).

17. The cell battery of claim 16, wherein the length of the communication portion (6) is equal to half the length of the first tab connecting portion (1).

18. The cell battery of claim 11, wherein the terminal connecting portion (3) is provided with a plurality of soldering grooves (31), an inner side wall of each of the soldering grooves (31) has an inclined inner wall, and an area of a cross-section of the soldering groove (31) decreases gradually from a top to a bottom.

19. The cell battery of claim 18, wherein the inclined inner wall defines an inclination angle ranging from 30° to 60°.

20. The cell battery of claim 18, wherein a depth of the soldering groove (31) is greater than 0.2 mm; and an area of a maximum cross-section of the soldering groove (31) ranges from 0.09 mm² to 0.49 mm².
